# EUROPEAN PATENT APPLICATION

(11) **EP 4 386 890 A1**
(43) Date of publication of application: **19.06.2024**
(21) Application number: 23208265.1
(22) Date of filing: 07.11.2023
(51) Int. Cl.: H01M 4/133, H01M 4/134, H01M 4/1393, H01M 4/1395, H01M 4/36, H01M 4/38, H01M 4/62, H01M 4/02

(54) **NEGATIVE ELECTRODE FOR NON-AQUEOUS ELECTROLYTE SECONDARY BATTERY, AND METHOD OF PRODUCING THE SAME**

(30) Priority: 13.12.2022 JP 2022198432
(71) Applicant: Prime Planet Energy & Solutions, Inc., Chuo-ku Tokyo 103-0022 (JP)
(72) Inventor: TSUZUKI, Kouhei, Tokyo, 103-0022 (JP); SANO, Hideki, Tokyo, 103-0022 (JP)
(74) Representative: Kuhnen & Wacker Patent- und Rechtsanwaltsbüro PartG mbB

(57) **Abstract**

The present disclosure relates to a negative electrode (100) for a non-aqueous electrolyte secondary battery comprising a negative electrode active material layer (20), wherein the negative electrode active material layer (20) includes a negative electrode active material (21), carbon nanotubes (22), and a binder, the negative electrode active material (21) includes an alloy-based negative electrode active material (23) and a carbon-based negative electrode active material (24), the carbon nanotubes (22) include single-walled carbon nanotubes having a curved structure, the single-walled carbon nanotubes having a curved structure have an average length of 1 µm or more and an average diameter of 0.05 µm or less, and the single-walled carbon nanotube having a curved structure is in contact with a particle and another particle.

## Description

### CROSS REFERENCE TO RELATED APPLICATIONS

This nonprovisional application is based on Japanese Patent Application No. 2022-198432 filed on December 13, 2022, with the Japan Patent Office, the entire contents of which are hereby incorporated by reference.

### BACKGROUND OF THE INVENTION

### Field of the Invention

The present disclosure relates to a negative electrode for a non-aqueous electrolyte secondary battery, a method of producing the same, and a non-aqueous electrolyte secondary battery.

### Description of the Background Art

A negative electrode for a non-aqueous electrolyte secondary battery including graphite and fibrous carbon is known (Japanese Patent Laying-Open No. 2021-99955).

### SUMMARY OF THE INVENTION

In the negative electrode for a non-aqueous electrolyte secondary battery disclosed by Japanese Patent Laying-Open No. 2021-99955, capacity retention can decrease during cycle testing. An object of the present disclosure is to provide a negative electrode for a non-aqueous electrolyte secondary battery (hereinafter also called a negative electrode), and a non-aqueous electrolyte secondary battery, and a method of producing a negative electrode, each of which is capable of inhibiting a decrease in capacity retention during cycle testing.

The present disclosure provides a negative electrode, a non-aqueous electrolyte secondary battery, and a method of producing a negative electrode, as described below.
[1] A negative electrode for a non-aqueous electrolyte secondary battery comprising a negative electrode active material layer, wherein the negative electrode active material layer includes a negative electrode active material, carbon nanotubes (hereinafter also called CNTs), and a binder, the negative electrode active material includes an alloy-based negative electrode active material and a carbon-based negative electrode active material, the CNTs include single-walled carbon nanotubes having a curved structure (hereinafter also called curved SWCNTs), the curved SWCNTs have an average length of 1 µm or more and an average diameter of 0.05 µm or less, and the curved SWCNT is in contact with a particle and another particle.
[2] The negative electrode for a non-aqueous electrolyte secondary battery according to [1], wherein the curved structure has one or more points of curving.
[3] The negative electrode for a non-aqueous electrolyte secondary battery according to [1] or [2], wherein a content of the CNTs is from 0.01 mass% to 0.2 mass% with respect to the negative electrode active material layer.
[4] The negative electrode for a non-aqueous electrolyte secondary battery according to any one of [1] to [3], wherein a ratio of a particle size D50 of the alloy-based negative electrode active material to a particle size D50 of the carbon-based negative electrode active material is 0.40 or less.
[5] The negative electrode for a non-aqueous electrolyte secondary battery according to any one of [1] to [4], wherein the CNTs further include other CNTs other than the curved SWCNTs.
[6] The negative electrode for a non-aqueous electrolyte secondary battery according to any one of [1] to [5], wherein a ratio of a number of the SWCNTs having a curved structure to a total number of the CNTs present within a region of 15 µm×8 µm of a surface of the negative electrode active material layer viewed in a thickness direction is more than 0.15 and not more than 0.9.
[7] The negative electrode for a non-aqueous electrolyte secondary battery according to any one of [1] to [6], wherein a ratio of a number of the SWCNTs having a length of 0.5 µm or more to a total number of the CNTs present within a region of 15 µm×8 µm of the surface of the negative electrode active material layer viewed in a thickness direction is 0.5 or more.
[8] A method of producing the negative electrode for a non-aqueous electrolyte secondary battery according to any one of [1] to [7], the method comprising a paste preparation step that involves preparation of a negative electrode active material layer forming paste, wherein the paste preparation step includes: (a1) mixing and kneading a negative electrode active material, a binder, and a dispersion medium; and (a2) subsequently adding CNTs and mixing and kneading.
[9] A method of producing the negative electrode for a non-aqueous electrolyte secondary battery according to any one of [1] to [8], the method comprising a paste preparation step that involves preparation of a negative electrode active material layer forming paste, wherein the paste preparation step includes: (b 1) mixing and kneading a negative electrode active material, a binder, and CNTs; and (b2) adding a dispersion medium in an amount at least 2% higher than 70% oil absorption number and mixing and kneading.
[10] A method of producing the negative electrode for a non-aqueous electrolyte secondary battery according to any one of [1] to [9], the method comprising a paste preparation step that involves preparation of a negative electrode active material layer forming paste, wherein the paste preparation step includes: (c1) mixing a negative electrode active material, a binder, a dispersion medium, and CNTs and stirring at a peripheral speed of 230 m/minute or less.

The foregoing and other objects, features, aspects and advantages of the present invention, when taken in conjunction with the accompanying drawings will become more apparent from the following detailed description of the present invention.

### BRIEF DESCRIPTION OF THE DRAWINGS

Fig. 1 is a schematic view illustrating an example configuration of a negative electrode according to the present embodiment.
Fig. 2 is a schematic view describing the degree of curving of curved SWCNTs.
Fig. 3 is a schematic flowchart illustrating a method of producing a negative electrode.
Fig. 4 is a schematic view illustrating an example configuration of a battery according to the present embodiment.
Fig. 5 is a schematic view illustrating an example configuration of an electrode assembly according to the present embodiment.

### DESCRIPTION OF THE PREFERRED EMBODIMENTS

In the following, a description will be given of an embodiment of the present disclosure with reference to drawings; however, the below-described embodiment does not limit the scope of the present disclosure. In each drawing below, the scale has been changed as appropriate for the purpose of assisting the understanding of the components; therefore, the scale of the components in the drawings may not necessarily coincide with the actual scale of the components.

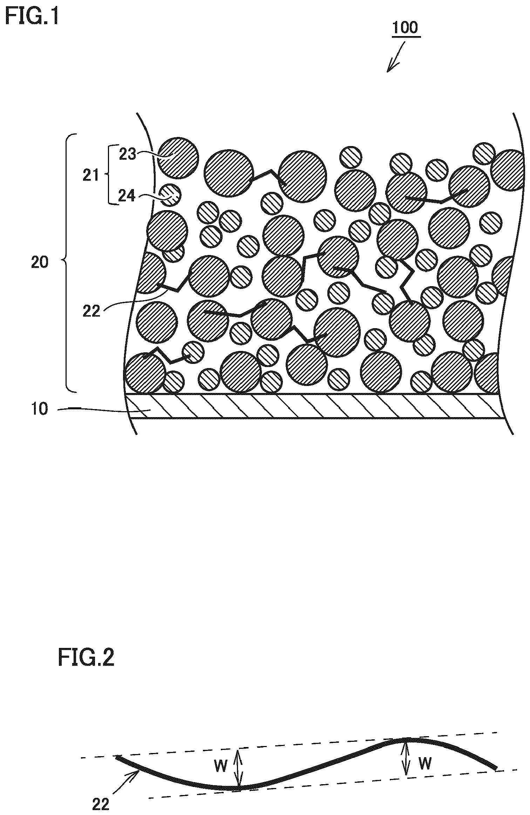

A negative electrode according to the present disclosure will be described referring to the drawings. A negative electrode 100 illustrated in Fig. 1 comprises a current collector 10 and a negative electrode active material layer 20. The negative electrode active material layer may be provided on only one side or both sides of the current collector. Negative electrode active material layer 20 includes a negative electrode active material 21, CNTs 22, and a binder (not illustrated). Negative electrode active material 21 includes an alloy-based negative electrode active material 23 and a carbon-based negative electrode active material 24. Current collector 10 is an electrically-conductive sheet. Current collector 10 may include an aluminum (Al) foil, a copper (Cu) foil, and/or the like, for example. Current collector 10 may have a thickness from 5 µm to 50 µm, for example. On the surface of current collector 10, a covering layer may be formed, for example. The covering layer may include an electrically-conductive carbon material and/or the like, for example. The covering layer may have a thickness that is smaller than that of negative electrode active material layer 20, for example.

Negative electrode active material 21 may include alloy-based negative electrode active material 23 and carbon-based negative electrode active material 24 in particle form. The active material particles may have any size. Particles that include alloy-based negative electrode active material 23 may have a particle size D50 from 1 µm to 10 µm, for example, preferably from 2 µm to 8 µm, more preferably from 3 µm to 6 µm. Particles that include carbon-based negative electrode active material 24 have a particle size D50 from 1 µm to 50 µm, for example, preferably from 5 µm to 40 µm, more preferably from 8 µm to 30 µm. Herein, the particle size D50 of the active material particles refers to a particle size in volume-based particle size distribution at which the cumulative particle volume accumulated from the side of small particle sizes reaches 50% of the total particle volume. The average particle size may be measured by a laser diffraction and scattering method. The ratio of the particle size D50 of alloy-based negative electrode active material 23 to the particle size D50 of carbon-based negative electrode active material 24 is 0.40 or less, for example, preferably 0.35 or less.

Alloy-based negative electrode active material 23 may include a Si-containing material. As far as it includes Si, the Si-containing material may further include an additional component. The Si-containing material may include a Si/C composite material, for example. The Si-containing material has an oxygen content of 25 wt% or less, for example, preferably 15 wt% or less, more preferably 7 wt% or less. When the oxygen content is within the above range, capacity is likely to be enhanced. The Si-containing material may have internal pores. When they have internal pores, the porosity may be 5 volume% or more, for example. The Si-containing material may be covered with amorphous carbon on the surface.

Carbon-based negative electrode active material 24 may include, for example, at least one selected from the group consisting of graphite, soft carbon, and hard carbon. The graphite may be artificial graphite. Carbon-based negative electrode active material 24 has a BET specific surface area, which is measured by a BET multi-point method, of 3.5 m²/g or less, for example, and from the viewpoint of adhesion to the Si-containing material, the BET specific surface area is preferably from 0.5 m²/g to 3.5 m²/g, more preferably from 1 m²/g to 2.5 m²/g.

CNTs 22 are capable of inhibiting isolation of the negative electrode active material particles from each other, and may function as a conductive material. CNTs 22 include curved SWCNTs. The curved SWCNT may be a carbon nanostructure which is a single cylindrical body having a curved structure and composed of a single carbon hexagonal network layer. From the viewpoint of connection between the particles, the average length of the curved SWCNTs is 1 µm or more, preferably from 1 µm to 5 µm. The length of a single curved SWCNT is 0.1 µm or more, for example, and from the viewpoint of connection between the particles, it is preferably from 0.5 µm to 5 µm. The average diameter of the curved SWCNTs is 0.05 µm or less, preferably 0.015 µm or less. The length, average length, and average diameter of the curved SWCNTs are measured by the methods described in the Examples section.

The curved SWCNT is in contact with a negative electrode active material particle as well as another particle. The curved SWCNTs tend to follow the movement of the particles at the time of expansion and shrinkage of the negative electrode active material layer during cycle testing, and, as a result, the particles tend not to be separated from each other and electron conduction paths tend not to be cut. The curved structure may be a structure having one or more points of curving, for example, and may have two or more, or three or more, points of curving. As for the degree of curving of the curved structure, as shown in Fig. 2, the shortest distance W from a point of curving to a line that connects two highest points (or two lowest points) flanking the point of curving is 0.1 µm or more, for example, preferably 0.2 µm or more. The length, average length, average diameter, point(s) of curving, and degree of curving of the curved SWCNTs can be adjusted by changing the mixing and kneading conditions in a paste preparation step. As the curved SWCNTs, a commercially available product may also be used.

CNTs 22 may further include other CNTs other than the curved SWCNTs. Examples of these other CNTs include single-walled carbon nanotubes that do not have a curved structure, multi-walled CNTs (hereinafter also called MWCNTs), and the like. The ratio of the number of the curved SWCNTs to the total number of the CNTs present within a region of 15 µm×8 µm of a surface of the negative electrode active material layer viewed in a thickness direction (hereinafter also called the first number ratio) is more than 0.15 and not more than 0.9, for example, preferably from 0.2 to 0.8. The ratio of the number of the SWCNTs having a length of 0.5 µm or more to the total number of the CNTs present within a region of 15 µm×8 µm of the surface of the negative electrode active material layer viewed in a thickness direction (also called the second number ratio) is 0.5 or more, for example, preferably 0.7 or more, more preferably 0.9 or more, further preferably 1. The first number ratio and the second number ratio are measured by a method described in the Examples section below.

The binder includes at least one selected from the group consisting of carboxymethylcellulose (CMC), fluororesins such as polyvinylidene difluoride (PVdF), poly(vinylidenefluoride-co-hexafluoropropylene) (PVdF-HFP), and polytetrafluoroethylene (PTFE), polyacrylonitrile, polyimide, polyamide, acrylic resin, polyolefin, polyvinyl alcohol, polyacrylic acid (PAA), polyethylene oxide (PEO), and styrene-butadiene rubber (SBR). The binder preferably includes SBR, CMC, and PAA. When the binder includes SBR, the content of SBR is preferably from 0.5 to 5 mass%, more preferably from 1 to 3 mass%, with respect to the negative electrode active material layer. When the binder includes CMC, the content of CMC is preferably from 0.3 to 3 mass%, more preferably from 0.5 to 1.5 mass%, with respect to the negative electrode active material layer. When the binder includes PAA, the content of PAA is preferably from 0.5 to 5 mass%, more preferably from 1 to 3 mass%, with respect to the negative electrode active material layer.

The thickness of negative electrode active material layer 20 is preferably from 100 to 260 µm, more preferably from 120 to 200 µm. The packing density of negative electrode active material layer 20 is preferably from 1.2 to 1.7 g/cc, more preferably from 1.45 to 1.65 g/cc. Negative electrode active material layer 20 may have pores, and when it has pores, the porosity is preferably from 20 to 35%.

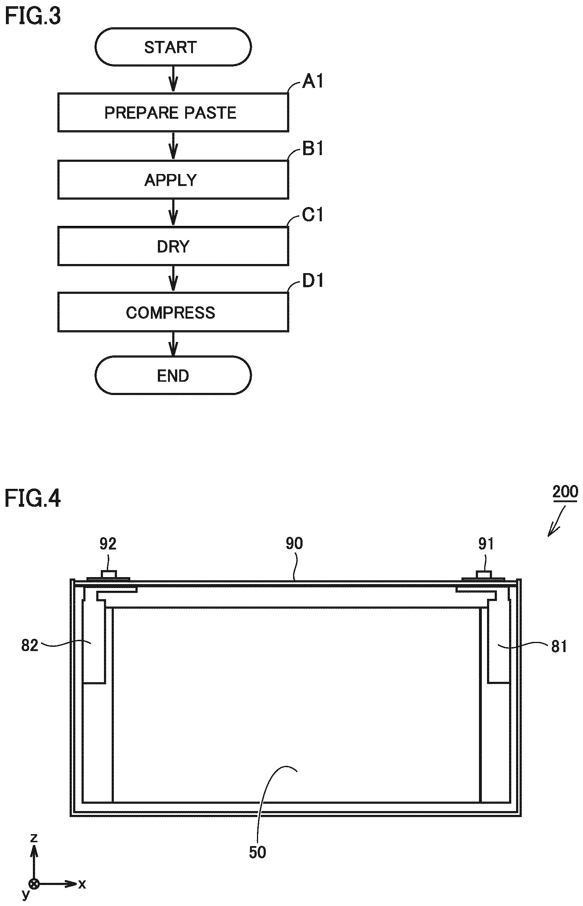

The method of producing negative electrode 100 may include a negative electrode active material layer forming paste (hereinafter also called the paste) preparation step (A1), a coating step (B1), a drying step (C1), and a compression step (D1), as illustrated in Fig. 3. In the paste preparation step, the negative electrode active material, the CNTs, the binder, and a freely-selected amount of a dispersion medium may be mixed. The solid concentration (the mass fraction of solid matter) of the paste is not particularly limited. The solid concentration of the paste may be from 40% to 80%, for example. For the mixing, any stirring apparatus, any mixing apparatus, and/or any dispersing apparatus may be used. Negative electrode 100 may be cut into predetermined planar dimensions depending on the specifications of the battery.

The paste preparation step may include (a1) mixing and kneading the negative electrode active material, the binder, and the dispersion medium, and (a2) subsequently adding the CNTs and mixing and kneading. When the step includes (a1) and (a2), the active material particles may be readily connected to each other.

The paste preparation step may include (b 1) mixing and kneading the negative electrode active material, the binder, and the CNTs, and (b2) adding the dispersion medium in an amount at least 2% higher than 70% oil absorption number and mixing and kneading. The 70% oil absorption number refers to the amount of water (the water content) that has been added at the point in time when the torque measured at that point is 70% of the maximum torque while a desired composition amount of the active material is being mixed with addition of water. The water content A₀ (%) and the solid content B₀ (%) when the dispersion medium is added in an amount at least 2% higher than 70% oil absorption number, as well as the water amount A₁ (mL) per 100 g of the active material at 70% oil absorption number, satisfy the relationship of the following equation: B₀=100-A₀=[100/(100+A₁)×100]-2 (%). When the step includes (b 1) and (b2), the shear at the time of mixing and kneading may be reduced and the dispersion energy may be reduced, which can prevent the CNTs from being cut and shortened, leading to an increase of the ratio of curved CNTs.

The paste preparation step may include (c1) mixing the negative electrode active material, the binder, the dispersion medium, and the CNTs and stirring at a peripheral speed of 230 m/minute or less. When the step includes (c1), the CNTs tend not to be positioned on a single large particle of the negative electrode active material in the fluid at the time of stirring, and, thereby, the negative electrode active material may be readily connected to each other.

A battery according to the present embodiment is preferably a prismatic battery. A battery 200 illustrated in Fig. 4 includes an exterior package 90. Exterior package 90 accommodates an electrode assembly 50 and an electrolyte (not illustrated). Electrode assembly 50 is connected to a positive electrode terminal 91 via a positive electrode current-collecting member 81. Electrode assembly 50 is connected to a negative electrode terminal 92 via a negative electrode current-collecting member 82. Electrode assembly 50 may be either a wound-type one or a stack-type one. Electrode assembly 50 is preferably in flat form. Electrode assembly 50 includes negative electrode 100. Between electrode assembly 50 and exterior package 90, a resin sheet (an electrode assembly holder) may be provided.

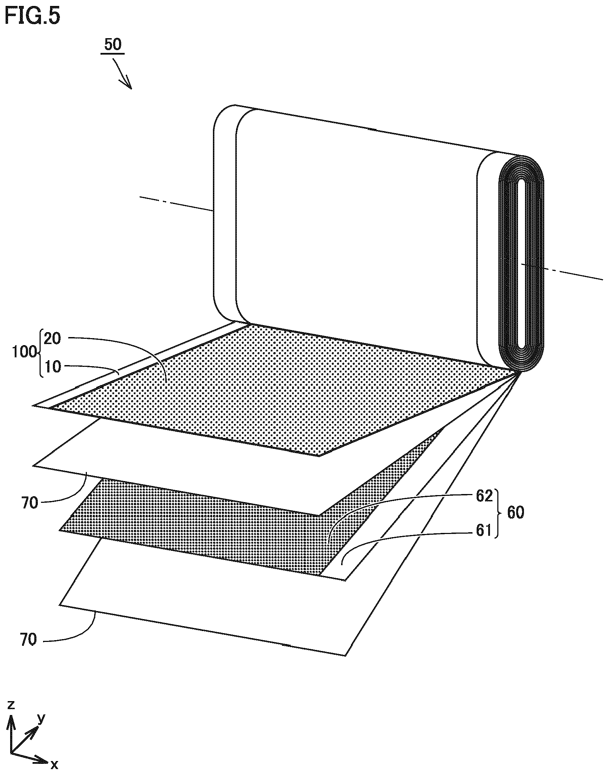

The electrode assembly may be either a wound-type electrode assembly or a stack-type electrode assembly. Preferably, it is a flat-form electrode assembly. Fig. 5 is a schematic view illustrating an example of an electrode assembly according to the present embodiment. Electrode assembly 50 is a wound-type one. Electrode assembly 50 includes a positive electrode 60, a separator 70, and negative electrode 100. That is, battery 200 includes negative electrode 100. Positive electrode 60 includes a positive electrode active material layer 62 and a positive electrode current collector 61. Negative electrode 100 includes negative electrode active material layer 20 and current collector (negative electrode current collector) 10.

### [Examples]

In the following, the present disclosure will be described in further detail by way of Examples. "%" and "part(s)" in Examples refer to mass% and part(s) by mass, respectively, unless otherwise specified.

### <Example 1>

[Production of negative electrode plate]: A negative electrode active material [graphite particles (D50=17 µm, BET=2.2 m²/g), Si-containing particles (SiC) (D50=6.5 µm)], a conductive material [fibrous carbon (single-walled carbon nanotubes, single-layered CNTs)], a binder (CMC, PAA, SBR), and water as a solvent were mixed and kneaded with the use of a stirring granulator to produce a negative electrode active material layer forming paste. The negative electrode active material layer forming paste was produced so as to have the following mass ratio: (graphite particles)/SiC/SWCNT/CMC/PAA/SBR=94/6/0.05/1/1/1 (mass%). In the paste production step, mixing and kneading were carried out in the below described procedure. (1) Graphite, SiC, CMC, and PAA were dry-mixed to produce a first mixture. (2) Water was added to the resulting first mixture, and mixing and kneading were carried out at a number of revolutions of 50 rpm for 90 minutes, to obtain a second mixture (solid content, 66.5%). (3) SWCNTs (water-soluble paste with a solid content of 1%) were added to the resulting second mixture, and mixing and kneading were carried out at a number of revolutions of 50 rpm for 15 minutes, to obtain a third mixture. (4) Water was added to the resulting third mixture, and mixing and kneading were carried out at a number of revolutions of 30 rpm for 30 minutes, to obtain a fourth mixture. (5) SBR and a dispersion solvent were added to the resulting fourth mixture for dilution, and mixing was carried out at a number of revolutions of 30 rpm for 30 minutes, to produce a negative electrode active material layer forming paste. As a stirrer, HIVIS MIX 2P-1 manufactured by PRIMIX Corporation was used. In each procedure, the peripheral speed at the time of stirring was 230 m/minute or less.

The negative electrode active material layer forming paste thus produced was applied to a Cu foil of 10 µm, dried, pressed into a certain thickness, made into certain dimensions, and thus a negative electrode plate was obtained. The coating weight for both sides was 215 m²/g, the thickness was 135 µm, and the packing density was 1.60 g/cc. The packing density is calculated by the following equation: Z=X/Y [Z is packing density (g/cc); X is the coating weight of the active material layer (m²/g); and Y is the thickness of the active material layer (µm)].

[Production of positive electrode plate]: A positive electrode active material [lithium-nickel-cobalt-manganese composite oxide (NCM)], a conductive material [acetylene black (AB)], a binder (PVDF), and NMP as a solvent were mixed and kneaded to produce a positive electrode active material layer forming paste. The positive electrode active material layer forming paste was produce so as to have the following mass ratio: (positive electrode active material)/(conductive material)/binder=100/1/1. The positive electrode active material layer forming paste thus produced was applied to an Al foil of 15 µm, dried, pressed into a certain thickness, made into certain dimensions, and thus a positive electrode plate was obtained.

[Production of test battery]: A lead was attached to each of the negative electrode plate and the positive electrode plate thus produced, and these electrode plates were stacked on top of one another with a separator interposed therebetween, to produce an electrode assembly. The electrode assembly thus produced was inserted into an exterior package made of an aluminum-laminated sheet, and a non-aqueous electrolyte was injected, followed by sealing the opening of the exterior package to obtain a test battery (a laminated cell). The non-aqueous electrolyte contained 1 M LiPF₆ as a Li salt and EC/EMC/DMC=20/40/40 (volume%) as a solvent.

[Evaluation of the state of CNTs]: Within an image of a region of 15 µm×8 µm of the surface of the negative electrode plate taken with an SEM (manufactured by Hitachi High-Tech Corporation) at an accelerating voltage of 1 kV, the number of CNTs, the number of curved SWCNTs, and the number of SWCNTs having a length of 0.5 µm or more were counted to determine first and second number ratios. In addition, the average diameter and the average length of the curved SWCNTs were also determined. As the length of the curved SWCNTs, the distance between one end and the other end was measured. Results are shown in Table 1.

[Cycle retention]: In an environment at 25°C, CC charging (0.05 C, 4.2 V) was performed followed by CC discharging (0.05 C, 2.5 V cut-off), and, with this procedure regarded as a single cycle, (1-cyc discharged capacity)/(1-cyc charged capacity) was determined as initial efficiency. In an environment at 25°C, CCCV charging (0.2 C, 4.2 V, 0.1 C cut-off) was performed followed by CC discharging (0.33 C, 2.5 V cut-off), and, with this procedure regarded as a single cycle, cycle testing was carried out until 100th cycle was reached. (100-cyc discharged capacity)/(1-cyc discharged capacity) was determined as cycle retention. Results are shown in Table 1.

### <Example 2>

A test battery was produced in the same manner as in Example 1 except that the procedure of the paste production step in Example 1 was changed as follows. (1) Graphite particles, SiC, CMC, and PAA were dry-mixed to produce a first mixture. (2) SWCNTs (water-soluble paste with a solid content of 1%) and water were added to the resulting first mixture, and mixing and kneading were carried out at a number of revolutions of 50 rpm for 90 minutes, to obtain a second mixture (solid content, 64.5%). (3) Water was added to the resulting second mixture, and mixing and kneading were carried out at a number of revolutions of 30 rpm for 30 minutes, to obtain a third mixture. (4) SBR and water were added to the resulting third mixture for dilution, and mixing was carried out at a number of revolutions of 30 rpm for 30 minutes, to produce a negative electrode active material layer forming paste. In each procedure, water was added so that the water content exceeded the 70% oil absorption number by 2%. In addition, in each procedure, the peripheral speed at the time of stirring was 230 m/minute or less. Results are shown in Table 1.

### <Comparative Example 1>

A test battery was produced in the same manner as in Example 2 except that water was added so that the water content at the time of mixing and kneading was equal to the 70% oil absorption number. Results are shown in Table 1.

### <Comparative Example 2>

A test battery was produced in the same manner as in Example 2 except that in the procedure (4) of Example 2, a disk-type rotation blade was used at the time of SBR addition to perform stirring at a peripheral speed of 235 m/minute (2500 rpm with the disk of 30-mm diameter) for 30 minutes. Results are shown in Table 1.

### <Comparative Example 3>

A test battery was produced in the same manner as in Example 2 except that the CNTs in Example 2 were changed to those specified in Table 1. Results are shown in Table 1.

### <Comparative Example 4>

A test battery was produced in the same manner as in Example 2 except that the CNTs in Example 2 were changed to those specified in Table 1. Results are shown in Table 1.

**[Table 1]**

| | CNT | | | | Connection between particles | First number ratio | Second number ratio | Cycle retention (%) |
|---|---|---|---|---|---|---|---|---|
| | Type | Average length (µm) | Average diameter (µm) | Curved structure (number of points of curving) | | | | |
| Ex. 1 | SWCNT | 2.0 | 0.05 or less | Present (1) | Present | 0.25 | 0.79 | 95 |
| Ex. 2 | SWCNT | 1.0 | 0.05 or less | Present (1) | Present | 0.15 | 0.78 | 93 |
| Comp. Ex. 1 | SWCNT | 0.2 | 0.05 or less | None (0) | None | 0 | 0.42 | 88 |
| Comp. Ex. 2 | SWCNT | 2.0 | 0.05 or less | Present (1) | None | 0.08 | 0.85 | 87 |
| Comp. Ex. 3 | SWCNT | 0.5 | 0.05 or less | Present (1) | None | 0.13 | 0.35 | 82 |
| Comp. Ex. 4 | MWCNT | 2.0 | 0.05 or less | Present (1) | Present | 0.3 | 0.6 | 79 |

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

## Claims

1. A negative electrode (100) for a non-aqueous electrolyte secondary battery, comprising:
a negative electrode active material layer (20), wherein
the negative electrode active material layer (20) includes a negative electrode active material (21), carbon nanotubes (22), and a binder,
the negative electrode active material (21) includes an alloy-based negative electrode active material (23) and a carbon-based negative electrode active material (24),
the carbon nanotubes (22) include single-walled carbon nanotubes having a curved structure,
the single-walled carbon nanotubes having a curved structure have an average length of 1 µm or more and an average diameter of 0.05 µm or less, and
the single-walled carbon nanotube having a curved structure is in contact with a particle and another particle.

2. The negative electrode for a non-aqueous electrolyte secondary battery according to claim 1, wherein the curved structure has one or more points of curving.

3. The negative electrode for a non-aqueous electrolyte secondary battery according to claim 1, wherein a content of the carbon nanotubes (22) is from 0.01 mass% to 0.2 mass% with respect to the negative electrode active material layer (20).

4. The negative electrode for a non-aqueous electrolyte secondary battery according to claim 1, wherein a ratio of a particle size D50 of the alloy-based negative electrode active material (23) to a particle size D50 of the carbon-based negative electrode active material (24) is 0.40 or less.

5. The negative electrode for a non-aqueous electrolyte secondary battery according to claim 1, wherein the carbon nanotubes (22) further include other carbon nanotubes other than the single-walled carbon nanotubes having a curved structure.

6. The negative electrode for a non-aqueous electrolyte secondary battery according to claim 1, wherein a ratio of a number of the single-walled carbon nanotubes having a curved structure to a total number of the carbon nanotubes (22) present within a region of 15 µm×8 µm of a surface of the negative electrode active material layer (20) viewed in a thickness direction is more than 0.15 and not more than 0.9.

7. The negative electrode for a non-aqueous electrolyte secondary battery according to claim 1, wherein a ratio of a number of the single-walled carbon nanotubes having a length of 0.5 µm or more to a total number of the carbon nanotubes (22) present within a region of 15 µm×8 µm of the surface of the negative electrode active material layer (20) viewed in a thickness direction is 0.5 or more.

8. A method of producing the negative electrode (100) for a non-aqueous electrolyte secondary battery according to claim 1, the method comprising:
a paste preparation step that involves preparation of a negative electrode active material layer forming paste, wherein the paste preparation step includes:
(a1) mixing and kneading a negative electrode active material (21), a binder, and a dispersion medium; and
(a2) subsequently adding carbon nanotubes (22) and mixing and kneading.

9. A method of producing the negative electrode (100) for a non-aqueous electrolyte secondary battery according to claim 1, the method comprising:
a paste preparation step that involves preparation of a negative electrode active material layer forming paste, wherein the paste preparation step includes:
(b 1) mixing and kneading a negative electrode active material (21), a binder, and carbon nanotubes (22); and
(b2) adding a dispersion medium in an amount at least 2% higher than 70% oil absorption number and mixing and kneading.

10. A method of producing the negative electrode (100) for a non-aqueous electrolyte secondary battery according to claim 1, the method comprising:
a paste preparation step that involves preparation of a negative electrode active material layer forming paste, wherein the paste preparation step includes:
(c1) mixing a negative electrode active material (21), a binder, a dispersion medium, and carbon nanotubes (22) and stirring at a peripheral speed of 230 m/minute or less.
